# EUROPÄISCHE PATENTSCHRIFT

(11) **EP 2 955 904 B1**
(45) Veröffentlichungstag und Bekanntmachung des Hinweises auf die Patenterteilung: **19.10.2016**
(21) Anmeldenummer: 14171757.9
(22) Anmeldetag: 10.06.2014
(51) Int. Cl.: H04L 29/12

(54) **VERGABE VON NETZWERKADRESSEN FÜR NETZTEILNEHMER**
ALLOCATION OF NETWORK ADDRESSES FOR NETWORK PARTICIPANTS
ALLOCATION D'ADRESSES DE RÉSEAU POUR UTILISATEURS DU RÉSEAU

(43) Veröffentlichungstag der Anmeldung: 16.12.2015
(73) Patentinhaber: Siemens Aktiengesellschaft, 80333 München (DE)
(72) Erfinder: Albrecht, Harald, 90475 Nürnberg (DE); Gerlach, Hendrik, 91058 Erlangen (DE); Schönmüller, Bernd, 90475 Nürnberg (DE); Talanis, Thomas, 91336 Heroldsbach (DE)

(56) Entgegenhaltungen:
- US-A1- 2003 182 445
- WHITE A WILLIAMS MOTOROLA A: "Zero-Configuration Subnet Prefix Allocation Using UIAP draft-white-zeroconf-subnet-alloc-01.txt; draft-white-zeroconf-subnet-alloc-01.txt", 20021031, Nr. 1, 31. Oktober 2002 (2002-10-31), XP015005728, ISSN: 0000-0004
- DAVE THALER CHRISTIAN HUITEMA MICROSOFT: "Multi-link Subnet Support in IPv6 <draft-ietf-ipv6-multilink-subnets-00.txt> ; draft-ietf-ipv6-multilink-subnets-00.txt", 20020629, Bd. ipv6, 29. Juni 2002 (2002-06-29), XP015002367, ISSN: 0000-0004

## Beschreibung

Die Erfindung betrifft ein Verfahren zur Vergabe von Netzwerkadressen für Netzteilnehmer eines segmentierten Netzes mit mehreren Subnetzen. Ferner betrifft die Erfindung eine Routerkomponente zur Durchführung des Verfahrens.

Insbesondere betrifft die Erfindung die Vergabe von Netzwerkadressen in segmentierten Netzen, die verschiedene Subnetze aufweisen, die mit einem Sammelnetz über Routing verbunden sind. Netze mit einer derartigen Netztopologie werden häufig für Maschineninstallationen verwendet, um maschineninterne Subnetze mit daran angeschlossener Sensorik und Aktorik weitgehend von dem Sammelnetz abzuschirmen und dadurch sowohl einen möglichst sicheren als auch störungsfreien Maschinenbetrieb zu ermöglichen. Mit dem Sammelnetz werden die Maschinen untereinander und mit anderen Geräten, wie beispielsweise einem Engineering-System und/oder Benutzerschnittstellen (HMI = Human Maschine Interface) zum Beobachten und Bedienen der Maschinen vernetzt. Auch in derartigen segmentierten Netzen wird häufig gefordert, beispielsweise zu Diagnosezwecken direkt auf automatisierungstechnische Geräte in den abgetrennten Subnetzen zugreifen können.

Oftmals ist aus betrieblichen Wünschen das gesamte Netz als ein Inselnetz ausgeführt. Damit fehlt insbesondere ein Default-Router auf einer obersten Ebene. In alternativen Fällen, in denen ein Default-Router vorhanden ist, kann ein unterbrechungsfreier Weiterbetrieb des Netzes selbst bei einem Ausfall des Default-Routers gefordert sein. In beiden Fällen wird eine stabile interne Adresslage auch ohne vorherige Planung und/oder manuelle Konfiguration gewünscht.

Das Dokument" Multi-link Subnet Support in IPV6" Offenbart unter anderem die manuelle Konfiguration des Präfixes.

Weil das Gesamtnetz nicht flach, sondern in Subnetze aufgetrennt ist, wird auch auf der Ebene des Sammelnetzes dabei in jedem daran angeschlossenen Netzeilnehmer Wissen über alle Routen in die Subnetze erforderlich. Betroffen sind davon insbesondere speicherprogrammierbare Steuerungen von Maschinen, ein Engineering-System und/oder Benutzerschnittstellen sowie weitere damit direkt vernetzte Geräte.

Wünschenswert ist ferner, die beschriebene Netztopologie möglichst ohne besonderes IT- (IT = Informationstechnologie) und Netzwerk-Fachwissen problemlos in Betrieb setzen und auch später noch einfach erweitern oder ändern zu können, beispielsweise wenn eine weitere Maschine installiert wird. Schließlich ist es wünschenswert, zukünftig einen derartigen konfigurationsfreien Netzbetrieb innerhalb von Teilen größerer Netze einsetzen zu können, beispielsweise innerhalb von Produktionszellen als Teilen größerer Produktionsanlagen.

Bekannte Vorgehensweisen, um eine Netztrennung bei gleichzeitiger Erreichbarkeit aller Netzteilnehmer umzusetzen, sind das applikative Routing und das IP-Routing (IP = Internet Protocol).

Beim applikativen Routing wird über die möglicherweise in verschiedenartigen Technologien ausgeführten Subnetze eine gemeinsame (neue) Netzwerkschicht mit eigener Netzadressierung gebaut. Dabei werden solche applikativen Netzwerke beispielsweise mit einem Engineering-Werkzeug vorgeplant, damit daraus die verfügbaren Routen berechnet und in die einzelnen Applikationen geladen werden können. Das Konzept eines applikativen Routings ist dabei bei einigen Applikationen statisch. Vor-Ort-Anpassungen bei der Installation von Maschinen oder der Erweiterung existierender Maschinenparks sind nicht vorgesehen und erfordern dann immer das Gesamtprojekt, in dem die Änderungen vorgeplant und aus dem dann die geänderten Routendaten in die Netzteilnehmer geladen werden müssen. Jedoch steht das Gesamtprojekt aus praktischen Erwägungen in aller Regel vor Ort nicht zur Verfügung, und das Personal verfügt oftmals nicht über das Engineering-Werkzeug und das nötige Fachwissen für dessen Bedienung.

Vom IP-Routing erwarten Anwender mehr Flexibilität und eine durchgängige und offene, standardisierte Kommunikation. Die Architektur des IP ist aber in weiten Teilen von den Bedürfnissen der allgemeinen IT sowie von Internetdienstanbietern (ISP = Internet Service Provider) geprägt. In diesen Einsatzfällen findet man jedoch die oben beschriebene Netztopologie segmentierter Inselnetze praktisch nicht vor. Dementsprechend fehlen insbesondere dem immer noch weit verbreiteten IPv4 ( = Internet Protocol Version 4) Automatismen, um diese speziellen Netztopologien möglichst konfigurationsfrei und ohne Netzwerk-Fachwissen in Betrieb nehmen und später erweitern zu können.

Der Erfindung liegt die Aufgabe zugrunde, ein verbessertes Verfahren zur Vergabe von Netzwerkadressen für Netzteilnehmer eines segmentierten Netzes mit mehreren Subnetzen anzugeben. Ferner liegt der Erfindung die Aufgabe zugrunde, eine Routerkomponente zur Durchführung des Verfahrens anzugeben.

Die Aufgabe wird erfindungsgemäß hinsichtlich des Verfahrens durch die Merkmale des Anspruchs 1 und hinsichtlich der Routerkomponente durch die Merkmale des Anspruchs 12 gelöst.

Vorteilhafte Ausgestaltungen der Erfindung sind Gegenstand der Unteransprüche.

Bei dem erfindungsgemäßen Verfahren werden Netzwerkadressen für Netzteilnehmer eines segmentierten Netzes mit mehreren Subnetzen vergeben, wobei die Subnetze jeweils über einen Subnetz-Router an ein sie verbindendes Sammelnetz angeschlossen sind. Dabei wird von den Subnetz-Routern durch einen Austausch von über das Sammelnetz verteilten Router-Nachrichten dezentral ein gemeinsamer Adressbereich ermittelt und innerhalb des Adressbereichs werden Netzwerkadressen für die Netzteilnehmer festgelegt.

Die Erfindung realisiert damit eine dezentrale Vergabe von Netzwerkadressen durch Subnetz-Router in einem segmentierten Netz. Dadurch wird konfigurationsfrei eine Adresslage erzeugt, wobei hierfür weder ein zentraler Router (Root Router oder Default Router) noch eine manuelle Konfiguration benötigt wird. Dadurch werden einerseits Kosten für den zentralen Router und die Projektierung des Netzwerkes eingespart und andererseits Fehler aufgrund einer manuellen Konfiguration vermieden. Außerdem wird vorteilhaft vermieden, dass der Ausfall eines zentralen Routers das gesamte Netz stört. Ferner benötigen Anwender kein Fachwissen über Netzwerke und Adresskonfiguration, da sich das Netz selbst konfiguriert. Da eine manuelle Konfiguration von Routen entfällt, besteht auch kein Bedarf für privilegierte Anpassungen, die Anwender aus organisatorischen Gründen nicht ausführen dürfen.

Eine Ausgestaltung der Erfindung sieht vor, dass von den Subnetz-Routern untereinander durch den Austausch von Router-Nachrichten dezentral ein das Sammelnetz kennzeichnendes Sammelnetz-Präfix der Netzwerkadressen bestimmt wird.

Unter einem Präfix wird hier im Allgemeinen ein Netzwerkteil von Netzwerkadressen verstanden, der für alle Netzwerkadressen eines Netzes (oder Unternetzes) gleich ist. Der Begriff wurde in Anlehnung an das IPv6 (Internet Protocol Version 6) gewählt, ist hier aber nicht auf das IPv6 beschränkt zu verstehen.

Die dezentrale Bestimmung eines Sammelnetz-Präfix für das Sammelnetz ermöglicht vorteilhaft eine konfigurationsfreie Zuordnung der Subnetze zu dem Sammelnetz, wiederum ohne einen zentralen Router oder eine Projektierung des Netzwerkes zu benötigen. Das Sammelnetz kann insbesondere selbst ein Teilnetz eines größeren Netzes sein und als solches durch sein Sammelnetz-Präfix gekennzeichnet sein.

Um das Sammelnetz-Präfix zu bestimmen, wird vorzugsweise eine Auswahlvorschrift zur Auswahl eines Sammelnetz-Präfix aus einer Menge von Präfix-Kandidaten vorgegeben. Von jedem Subnetz-Router wird zunächst unabhängig von den anderen Subnetz-Routern ein Präfix-Kandidat generiert. Anschließend wird von den Subnetz-Routern durch den Austausch von über das Sammelnetz verteilten Router-Nachrichten aus der Menge der von den Subnetz-Routern generierten Präfix-Kandidaten gemäß der vorgegebenen Auswahlvorschrift das Sammelnetz-Präfix ermittelt. Gemäß der Auswahlvorschrift wird dabei beispielsweise aus einer Menge von Präfix-Kandidaten der numerisch kleinste Präfix-Kandidat als Sammelnetz-Präfix ausgewählt:

Diese Ausgestaltung der Erfindung ermöglicht vorteilhaft eine einfach implementierbare dezentrale Bestimmung des Sammelnetz-Präfix durch die Subnetz-Router.

Vorzugsweise wird dazu von jedem Subnetz-Router der von ihm generierte Präfix-Kandidat durch Router-Nachrichten den anderen Subnetz-Routern mitgeteilt bis dem Subnetz-Router von einem anderen Subnetz-Router ein Präfix-Kandidat mitgeteilt wird, der numerisch kleiner als der von ihm generierte Präfix-Kandidat ist. Ferner wird von dem Subnetz-Router der von ihm generierte Präfix-Kandidat oder ein den generierten Präfix-Kandidaten ersetzender Präfix-Kandidat durch einen dem Subnetz-Router von einem anderen Subnetz-Router mitgeteilten Präfix-Kandidaten ersetzt, falls der dem Subnetz-Router mitgeteilte Präfix-Kandidat numerisch kleiner als der von dem Subnetz-Router generierte Präfix-Kandidat oder als der den generierten Präfix-Kandidaten ersetzende Präfix-Kandidat ist.

Diese Ausgestaltung bewirkt, dass schließlich nur noch derjenige Subnetz-Router, der unter allen Subnetz-Routern den kleinsten Präfix-Kandidaten generiert hat, seinen Präfix-Kandidaten über das Sammelnetz mitteilt und alle anderen Subnetz-Router den von ihnen jeweils ursprünglich generierten Präfix-Kandidaten durch diesen kleinsten Präfix-Kandidaten ersetzt haben. Dadurch haben sich die Subnetz-Router auf den kleinsten generierten Präfix-Kandidaten als Sammelnetz-Präfix geeinigt. Durch ein geeignet gesteuertes Versenden von Router-Nachrichten, in denen Präfix-Kandidaten mitgeteilt werden, kann diese Einigung der Subnetz-Router auf ein Sammelnetz-Präfix sehr schnell erreicht werden. Nach der Einigung bleibt nur ein Subnetz-Router "aktiv" in dem Sinne, dass er das ausgewählte Sammelnetz-Präfix weiterhin über das Sammelnetz mitteilt.

Ferner teilt vorzugsweise jeder Subnetz-Router, der ein Abmelden oder einen Ausfall eines Subnetz-Routers, der das ausgewählte Sammelnetz-Präfix mittels Router-Nachrichten den anderen Subnetz-Routern mitteilt, erkennt, das ausgewählte Sammelnetz-Präfix durch Router-Nachrichten den anderen Subnetz-Routern mit bis ihm das ausgewählte Sammelnetz-Präfix von einem anderen Subnetz-Router, der eine kleinere link-lokale Netzwerkadresse als er hat, mitgeteilt wird.

Die vorgenannte Ausgestaltung der Erfindung sorgt dafür, dass die Rolle des "aktiven" Subnetz-Routers, der das ausgewählte Sammelnetz-Präfix über das Sammelnetz mitteilt, bei einem Ausfall oder einer Abmeldung des jeweils aktiven Subnetz-Routers von einem anderen Subnetz-Router, der den Ausfall oder die Abmeldung erkennt, übernommen wird. Falls der Ausfall oder die Abmeldung des aktiven Subnetz-Routers von mehreren Subnetz-Routern quasi gleichzeitig erkannt wird, wird dabei unter diesen Subnetz-Routern derjenige zum neuen aktiven Subnetz-Router, der die kleinste link-lokale Netzwerkadresse hat. Auf diese Weise bleibt die Adresslage in dem Netz vorteilhaft stabil, solange noch mindestens ein Subnetz-Router in Betrieb ist. Erst wenn alle Subnetz-Router ausgeschaltet oder abgeschaltet und wieder neu gestartet werden, muss die Sammelnetz-Präfix neu bestimmt werden. Dies gilt, solange kein persistenter Speicher auf den Subnetz-Routern genutzt wird.

Eine weitere Ausgestaltung sieht vor, dass von jedem Subnetz-Router ein eigener Subnetz-Adressbereich ermittelt wird und durch eine Router-Nachricht den anderen Subnetz-Routern eine Route in diesen Subnetz-Adressbereich mitgeteilt wird. Vorzugsweise wird dabei von jedem Subnetz-Router aus seinem Subnetz-Adressbereich für jedes durch ihn an das Sammelnetz angeschlossene Subnetz ein Subnetz-Präfix bestimmt.

Diese Ausgestaltung ermöglicht es an das Sammelnetz angeschlossenen Hosts, konfigurationsfrei mit Subnetzteilnehmern in Subnetzen kommunizieren zu können.

Eine weitere Ausgestaltung der Erfindung sieht vor, dass ein Internet Protocol als Netzwerkprotokoll zum Datenaustausch in dem Netz verwendet wird und die Netzwerkadressen gemäß dem verwendeten Internet Protocol gestaltet werden. Besonders bevorzugt wird dabei als Internet Protocol das IPv6 (Internet Protocol Version 6) verwendet.

Ein Internet Protocol eignet sich vorteilhaft als Netzwerkprotokoll zum Datenaustausch in einem segmentierten Netz, da es die Aufteilung der Netzwerkadressen in einen Netzwerkteil (Präfix) und einen Geräteteil vorsieht. Das IPv6 eignet sich insbesondere, da es über die Router Advertisements bereits zur Wahl von Adressbereichen, insbesondere Präfixen, geeignete Mittel vorsieht.

Dementsprechend sind bei der Verwendung von IPv6 die Router-Nachrichten vorzugsweise Router Advertisements gemäß dem IPv6.

Eine Routerkomponente zur Durchführung des erfindungsgemäßen Verfahrens ist dazu ausgebildet, anhand von empfangenen Router-Nachrichten an das Sammelnetz angeschlossene Subnetz-Router zu erkennen und durch Auswerten von empfangenen Router-Nachrichten und Erzeugen von Router-Nachrichten an der erfindungsgemäßen Ermittelung eines Sammelnetz-Präfix mitzuwirken.

Ein erfindungsgemäßer Subnetz-Router weist daher eine derartig ausgebildete Routerkomponente auf. Ein derartiger Subnetz-Router ist beispielsweise als eine speicherprogrammierbare Steuerung ausgebildet oder in eine speicherprogrammierbare Steuerung integriert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 ein Blockdiagramm eines segmentierten Netzes mit mehreren Subnetzen, und
FIG 2 ein Blockdiagramm eines Subnetz-Routers.

Einander entsprechende Teile sind in den Figuren mit den gleichen Bezugszeichen versehen.

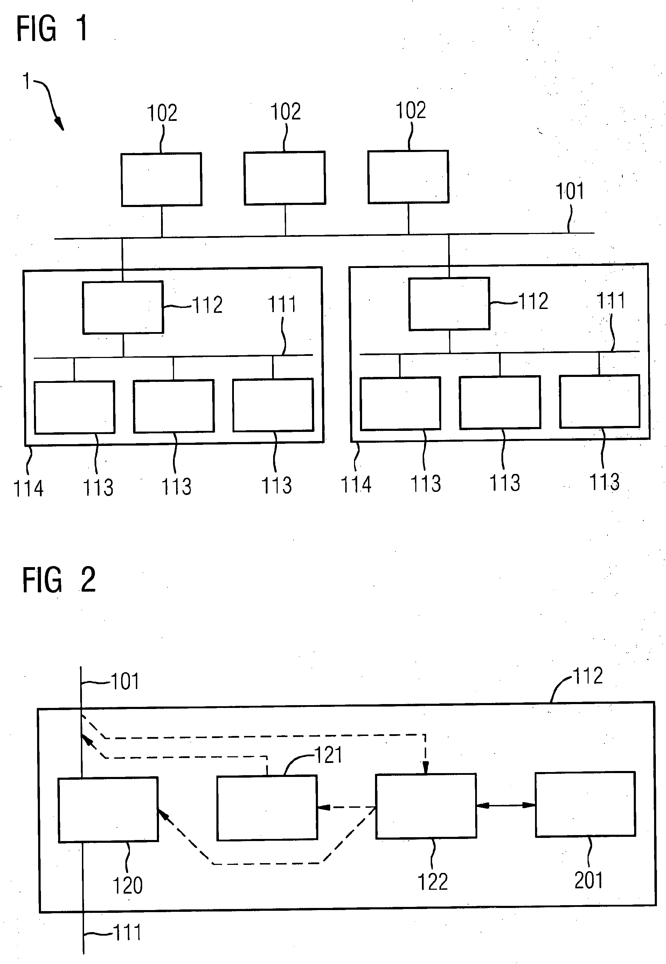

Figur 1 zeigt ein Blockdiagramm eines segmentierten Netzes 1 mit mehreren Subnetzen 111, die jeweils über einen Subnetz-Router 112 an ein sie verbindendes Sammelnetz 101 angeschlossen sind.

Ferner kann das Netz 1 an das Sammelnetz 101 angeschlossene weitere Hosts 102 ohne Routerfunktionalität umfassen. Zu derartigen weiteren Hosts 102 können beispielsweise ein Engineering-System oder Mensch-Maschine-Schnittstellen zählen.

Jedes Subnetz 111 umfasst mehrere Subnetz-Teilnehmer 113. Beispielsweise sind die Subnetz-Teilnehmer 113 eines Subnetzes 111 jeweils Ein-/Ausgabeeinheiten einer Maschine 114. Über den Subnetz-Router 112 eines Subnetzes 111 werden Daten aus dem Sammelnetz 101 in das Subnetz 111 und aus dem Subnetz 111 in das Sammelnetz 101 übertragen. Dabei können mehrere Subnetze 111 denselben Subnetz-Router 112 aufweisen.

Im Folgenden wird ein Ausführungsbeispiel der Erfindung beschrieben, bei der das IPv6 (Internet Protocol Version 6) als Netzwerkprotokoll zur Datenübertragung in dem Netz 1 verwendet wird.

Figur 2 zeigt ein Blockdiagramm eines Subnetz-Routers 112. Der Subnetz-Router 112 ist beispielsweise als eine speicherprogrammierbare Steuerung realisiert. Der Subnetz-Router 112 umfasst einen IP-Router 120 für das IPv6, einen Router Advertisement Daemon 121 zum Senden von Router Advertisements gemäß dem IPv6 und eine Routerkomponente 122 zu einer im Folgenden näher beschriebenen Ermittlung eines Sammelnetz-Präfix 201 des IPv6. Der Router Advertisement Daemon 121 und die Routerkomponente 122 sind als Softwarekomponenten des Subnetz-Routers 112 realisiert.

Von den Subnetz-Routern 112 wird durch einen Austausch von über das Sammelnetz verteilten Router Advertisements dezentral ein gemeinsamer Adressbereich für Netzwerkadressen in dem Netz 1 ermittelt und innerhalb des Adressbereichs werden Netzwerkadressen für die Netzteilnehmer festgelegt.

Dazu sind die Routerkomponenten 122 derart ausgebildet, dass sie
- die an das gemeinsame Sammelnetz 101 angeschlossenen Subnetz-Router 112 anhand deren Router Advertisements mit Routen-Informationen erkennen,
- dezentral ohne die Notwendigkeit für einen zentralen übergeordneten Router (also einen Default-Router) anhand eines unten beschriebenen Algorithmus ein gemeinsames Adressband, vorzugsweise aus dem ULA-Bereich (ULA = Unique Local Addresses), festlegen und dieses danach auch über das Abschalten einzelner oder mehrerer Subnetz-Router 112 hinaus stabil beibehalten,
- daraus geeignete Präfix- und Routeninformationen bestimmen und auch bei Änderungen nachführen,
- die dann über den Standard-Mechanismus der Router Advertisements von IPv6 an alle IPv6-Hosts am Sammelnetz 101, d.h. an die Subnetz-Router 112 und die weiteren Hosts 102, verteilt werden,
- woraufhin diese IPv6-Hosts gemäß den IPv6-Standards dynamisch und selbständig die erforderlichen Routen zu den erreichbaren Subnetzen 111 einrichten, nachführen oder löschen.

Im Folgenden wird zunächst beschrieben, wie die Adresslage in den Subnetzen 111 jeweils festgesetzt und bekanntgegeben wird.

Ein Anwender aktiviert während der Planungsphase oder alternativ bei der Installation einer Maschine 114 den Betrieb der Routerkomponente 122 des zugehörigen Subnetz-Routers 112. Für den Fall, dass an dem jeweiligen Subnetz 111 noch tiefere Unternetze existieren, aktiviert der Anwender die Routerkomponente 122 nur auf der obersten Ebene. Zudem ist für einen Subnetz-Router 112 festgelegt, welche seiner IP-Schnittstellen als so genanntes Upstream-Interface zum Sammelnetz 101 hin arbeitet; alle anderen IP-Schnittstellen agieren als so genannte Downstream-Interfaces zu jeweils einem mit dem Subnetz-Router 112 verbundenen Subnetz 111 hin.

Im Betrieb ermittelt jeder Subnetz-Router 112 für sich ein eigenes ULA-Band entsprechend der Definition in der IPv6-Norm des RFC 4193 (RFC = Request for Comments). Dieses kann beispielsweise statisch aus der MAC-Adresse (= Media-Access-Control-Adresse) des Upstream-Interface bestimmt werden. Dieses Vorgehen unterscheidet sich von der IPv6-Norm des RFC 4193 dahingehend, dass absichtlich kein zufälliges Band benutzt wird, sondern stets immer das gleiche, aber trotzdem hinreichend eindeutige ULA-Band auf Basis der MAC-Adresse. Damit wird erreicht, dass die Adresslage möglichst langzeitstabil bleibt.

Aus diesem eigenen ULA-Band entnimmt der Subnetz-Router 112 geeignete Subnetz-Präfixe für den Einsatz an den Subnetzen 111, also an seinen Downstream-Interfaces. Außerdem dient das ULA-Band einer möglichen weiteren Unterteilung, falls an einem Subnetz 111 noch tiefere Unternetze existieren.

Jeder Subnetz-Router 112 strahlt zudem am Sammelnetz 101 per Router Advertisement die Route in sein eigenes ULA-Band ab. Dieses Abstrahlen erfolgt konform zu dem RFC 4861. Dadurch erhalten am Sammelnetz angeschlossene IPv6-Hosts die Möglichkeit, mit Subnetz-Teilnehmern 113 in den Subnetzen 111 kommunizieren zu können.

Im Folgenden wird beschrieben, wie eine gemeinsame Adresslage am Sammelnetz festgesetzt und festgehalten wird.

Beim Start eines Subnetz-Routers 112 generiert dieser zunächst ein /64 Präfix aus seinem eigenen ULA-Band als Präfix-Kandidaten für ein Sammelnetz-Präfix 201 für das Sammelnetz 101.

Weiterhin beginnt jeder Subnetz-Router 112, sofern er noch keinen anderen Subnetz-Router 112 gehört hat, nach einer kurzen Wartezeit mit dem Aussenden von Router Advertisements, die seinen Präfix-Kandidaten für das Sammelnetz 101 verkünden.

Zugleich wertet jeder Subnetz-Router 112 die Router Advertisements anderer Subnetz-Router 112 darauf hin aus, ob sie Präfix-Informationen über das Sammelnetz 101 enthalten. Gemäß einer für alle Subnetz-Router 112 identischen Auswahlvorschrift bestimmen diese nun jeweils, ob sie einen fremden Präfix-Kandidaten übernehmen oder auf ihrem eigenem Präfix-Kandidaten bestehen. Dazu wählen sie den jeweils numerisch kleineren Präfix-Kandidaten aus dem eigenen Präfix-Kandidaten und dem vernommenem Präfix-Kandidaten aus.

Wird hierbei der zu Beginn generierte Präfix-Kandidat ersetzt, so zieht der betroffene Subnetz-Router 112 den bislang von ihm verkündeten eigenen Präfix-Kandidaten kontrolliert zurück, indem er ihn RFC-konform mit einer zu Null gesetzten Lebensdauer abkündigt. Der neu übernommene Präfix-Kandidat wird aber zunächst nicht per Router Advertisement über das Sammelnetz 101 mitgeteilt, sondern der betreffende Subnetz-Router wechselt in eine "stille" Betriebsart, in der er zwar seine Subnetz-Route, nicht jedoch den neuen Präfix-Kandidaten am Sammelnetz 101 mitteilt.

Es verbleibt damit nach kurzer Zeit nur ein einziger "aktiver" Subnetz-Router 112, der das ausgewählte, nun gültige Sammelnetz-Präfix 201 am Sammelnetz 101 verteilt.

Erkennt ein stiller Subnetz-Router 112 das Abmelden oder den Ausfall des aktiven Subnetz-Routers 112, so wechselt er seinerseits in die aktive Betriebsphase. Hierbei ist es möglich, dass mehrere Subnetz-Router 112 fast gleichzeitig aktiv werden. Diese Situation ist für einen Subnetz-Router 112 daran erkennbar, dass er das gleiche Sammelnetz-Präfix 201 hört, das er auch selbst ausstrahlt. In diesem Fall wechseln diejenigen aktiven Subnetz-Router 112 in die stille Betriebsart, die einen das Sammelnetz-Präfix 201 mitteilenden Subnetz-Router 112 hören, der eine kleinere link-lokale IPv6-Adresse als sie hat.

Durch diesen Mechanismus wird erreicht, dass nur ein Sammelnetz-Präfix 201 am Sammelnetz 101 ausgestrahlt und benutzt wird. Zugleich ist dieses Sammelnetz-Präfix 201 dauerhaft, solange mindestens noch ein Subnetz-Router 112 in Betrieb ist.

Erst wenn alle Subnetz-Router 112 ausgeschaltet und wieder neu gestartet werden, beginnt der gesamte Prozess von vorne.

Eine zusätzliche Verbesserung der Adressstabilität kann durch die folgende Erweiterung des oben geschilderten Vorgehens erreicht werden. Es wird zusätzlich die Lebensdauer des Sammelnetz-Präfix 201 am Sammelnetz 101 ausgewertet, wobei diese Lebensdauer mit in die Entscheidung eines Subnetz-Routers 112 eingeht, sich aus der Wahl des Sammelnetz-Präfix 201 zurückzuziehen. Dazu wird der zunächst für sich selbst generierte Präfix-Kandidat mit einer sehr kurzen Lebensdauer, beispielsweise im Minutenbereich, belegt. Stille Subnetz-Router 112 merken sich zudem nicht nur das gültige Sammelnetz-Präfix 201, sondern auch dessen Lebensdauer. Damit sind sie im der Lage, sollten sie aktiv werden müssen, die Lebensdauer des Sammelnetz-Präfix 201 korrekt zu erhalten. Ist ein Subnetz-Router 112 aktiv, dann setzt er die Lebensdauer des von ihm generierten Präfix-Kandidaten oder Sammelnetz-Präfix 201 herauf, wenn er einen anderen Subnetz-Router 112 hört, der eine höhere IPv6-Adresse als er besitzt. Damit wird erreicht, dass ein bestätigtes Sammelnetz-Präfix 201 durch seine längere Lebensdauer auch dann noch beibehalten wird, wenn durch Gerätetausch ein neuer Subnetz-Router 112 mit einer kleineren IPv6-Adresse als bislang hinzukommt.

Die Routerkomponente 122 eines Subnetz-Routers 112 steuert die vom Router Advertisement Daemon 121 des Subnetz-Routers 112 abzustrahlenden Router Advertisements und konfiguriert das Upstream-Interface des Subnetz-Routers 112 entsprechend mit dem ausgewählten Sammelnetz-Präfix 201.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Netz
- 101: Sammelnetz
- 102: Host ohne Routerfunktionalität
- 111: Subnetz
- 112: Subnetz-Router
- 113: Subnetz-Teilnehmer
- 114: Maschine
- 120: IP-Router
- 121: Router Advertisement Daemon
- 122: Routerkomponente
- 201: Sammelnetz-Präfix

## Patentansprüche

1. Verfahren zur Vergabe von Netzwerkadressen für Netzteilnehmer eines segmentierten Netzes (1) mit mehreren Subnetzen (111), die jeweils über einen Subnetz-Router (112) an ein sie verbindendes Sammelnetz (101) angeschlossen sind, wobei von den Subnetz-Routern (112) durch einen Austausch von über das Sammelnetz (101) verteilten Router-Nachrichten dezentral ein gemeinsamer Adressbereich ermittelt wird und innerhalb des Adressbereichs Netzwerkadressen für die Netzteilnehmer festgelegt werden.

2. Verfahren nach Anspruch 1,
**dadurch gekennzeichnet, dass** von den Subnetz-Routern (112) untereinander durch den Austausch der Router-Nachrichten dezentral ein das Sammelnetz (101) kennzeichnendes Sammelnetz-Präfix (201) der Netzwerkadressen bestimmt wird.

3. Verfahren nach Anspruch 2,
**dadurch gekennzeichnet, dass** eine Auswahlvorschrift zur Auswahl eines Sammelnetz-Präfix (201) aus einer Menge von Präfix-Kandidaten vorgegeben wird, von jedem Subnetz-Router (112) zunächst unabhängig von den anderen Subnetz-Routern (112) ein Präfix-Kandidat generiert wird, und von den Subnetz-Routern (112) anschließend durch den Austausch der über das Sammelnetz (101) verteilten Router-Nachrichten aus der Menge der von den Subnetz-Routern (112) generierten Präfix-Kandidaten gemäß der vorgegebenen Auswahlvorschrift das Sammelnetz-Präfix (201) ermittelt wird.

4. Verfahren nach Anspruch 2 oder 3,
**dadurch gekennzeichnet, dass** gemäß der Auswahlvorschrift aus einer Menge von Präfix-Kandidaten der numerisch kleinste Präfix-Kandidat als Sammelnetz-Präfix (201) ausgewählt wird.

5. Verfahren nach Anspruch 4,
**dadurch gekennzeichnet, dass** von jedem Subnetz-Router (112) der von ihm generierte Präfix-Kandidat durch Router-Nachrichten den anderen Subnetz-Routern (112) mitgeteilt wird bis dem Subnetz-Router (112) von einem anderen Subnetz-Router (112) ein Präfix-Kandidat mitgeteilt wird, der numerisch kleiner als der von ihm generierte Präfix-Kandidat ist, und dass von dem Subnetz-Router (112) der von ihm generierte Präfix-Kandidat oder ein den generierten Präfix-Kandidaten ersetzender Präfix-Kandidat durch einen dem Subnetz-Router (112) von einem anderen Subnetz-Router (112) mitgeteilten Präfix-Kandidaten ersetzt wird, falls der dem Subnetz-Router (112) mitgeteilte Präfix-Kandidat numerisch kleiner als der von dem Subnetz-Router (112) generierte Präfix-Kandidat oder als der den generierten Präfix-Kandidaten ersetzende Präfix-Kandidat ist.

6. Verfahren nach Anspruch 5,
**dadurch gekennzeichnet**, jeder Subnetz-Router (112), der ein Abmelden oder einen Ausfall eines Subnetz-Routers (112), der das ausgewählte Sammelnetz-Präfix (201) mittels Router-Nachrichten den anderen Subnetz-Routern (112) mitteilt, erkennt, das ausgewählte Sammelnetz-Präfix (201) durch Router-Nachrichten den anderen Subnetz-Routern (112) mitteilt bis ihm das ausgewählte Sammelnetz-Präfix (201) von einem anderen Subnetz-Router (112), der eine kleinere link-lokale Netzwerkadresse als er hat, mitgeteilt wird.

7. Verfahren nach einem der vorhergehenden Ansprüche,
**dadurch gekennzeichnet, dass** von jedem Subnetz-Router (112) ein eigener Subnetz-Adressbereich ermittelt wird und durch eine Router-Nachricht den anderen Subnetz-Routern (112) eine Route in diesen Subnetz-Adressbereich mitgeteilt wird.

8. Verfahren nach Anspruch 7,
**dadurch gekennzeichnet, dass** von jedem Subnetz-Router (112) aus seinem Subnetz-Adressbereich für jedes durch ihn an das Sammelnetz (101) angeschlossene Subnetz (111) ein Subnetz-Präfix bestimmt wird.

9. Verfahren nach einem der vorhergehenden Ansprüche,
**dadurch gekennzeichnet, dass** ein Internet Protocol als Netzwerkprotokoll zum Datenaustausch in dem Netz verwendet wird und die Netzwerkadressen gemäß dem verwendeten Internet Protocol gestaltet werden.

10. Verfahren nach Anspruch 9,
**dadurch gekennzeichnet, dass** als Internet Protocol das Internet Protocol Version 6 verwendet wird.

11. Verfahren nach Anspruch 10,
**dadurch gekennzeichnet, dass** die Router-Nachrichten Router Advertisements gemäß dem Internet Protocol Version 6 sind.

12. Routerkomponente (122) zur Durchführung des Verfahrens nach einem der vorhergehenden Ansprüche, wobei die Routerkomponente (122) dazu ausgebildet ist, anhand von empfangenen Router-Nachrichten an das Sammelnetz (101) angeschlossene Subnetz-Router (112) zu erkennen und durch Auswerten von empfangenen Router-Nachrichten und Erzeugen von Router-Nachrichten an der Ermittelung eines Sammelnetz-Präfix (201) gemäß einem der Ansprüche 3 bis 5 mitzuwirken.

13. Subnetz-Router (112) mit einer Routerkomponente (122) gemäß Anspruch 12.

14. Subnetz-Router (112) nach Anspruch 13,
**dadurch gekennzeichnet, dass** der Subnetz-Router (112) als eine speicherprogrammierbare Steuerung ausgebildet oder in eine speicherprogrammierbare Steuerung integriert ist.

## Claims

1. Method for allocating network addresses for network subscribers in a segmented network (1) having a plurality of subnetworks (111) that are each connected via a subnetwork router (112) to a busbar system (101) that connects them, wherein the subnetwork routers (112) ascertain a shared address range locally by exchanging router messages that are distributed via the busbar system (101), and network addresses for the network subscribers are stipulated within the address range.

2. Method according to Claim 1,
**characterized in that** the subnetwork routers (112) determine a busbar system prefix (201) for the network addresses, which denotes the busbar system (101), locally among one another by exchanging the router messages.

3. Method according to Claim 2,
**characterized in that** a selection rule for selecting a busbar system prefix (201) from a set of prefix candidates is prescribed, each subnetwork router (112) initially generates a prefix candidate independently of the other subnetwork routers (112), and the subnetwork routers (112) subsequently exchange the router messages distributed via the busbar system (101) in order to ascertain the busbar system prefix (201) from the set of prefix candidates generated by the subnetwork routers (112) on the basis of the prescribed selection rule.

4. Method according to Claim 2 or 3,
**characterized in that** the selection rule is taken as a basis for selecting the numerically smallest prefix candidate from a set of prefix candidates as the busbar system prefix (201).

5. Method according to Claim 4,
**characterized in that** each subnetwork router (112) notifies the other subnetwork routers (112) of the prefix candidate it generates by means of router messages until the subnetwork router (112) is notified by another subnetwork router (112) of a prefix candidate that is numerically smaller than the prefix candidate it generates, and **in that** the subnetwork router (112) replaces the prefix candidate it generates or a prefix candidate replacing the generated prefix candidate with a prefix candidate of which the subnetwork router (112) is notified by another subnetwork router (112) if the prefix candidate of which the subnetwork router (112) is notified is numerically smaller than the prefix candidate generated by the subnetwork router (112) or than the prefix candidate replacing the generated prefix candidate.

6. Method according to Claim 5,
**characterized in that** each subnetwork router (112) that identifies logoff or failure of a subnetwork router (112) that notifies the other subnetwork routers (112) of the selected busbar system prefix (201) by means of router messages notifies the other subnetwork routers (112) of the selected busbar system prefix (201) by means of router messages until it is notified of the selected busbar system prefix (201) by another subnetwork router (112) that has a smaller link-local network address than it.

7. Method according to one of the preceding claims, **characterized in that** each subnetwork router (112) ascertains a subnetwork address range of its own, and a router message notifies the other subnetwork routers (112) of a route into this subnetwork address range.

8. Method according to Claim 7,
**characterized in that** each subnetwork router (112) determines a subnetwork prefix from its subnetwork address range for each subnetwork (111) that it connects to the busbar system (101).

9. Method according to one of the preceding claims,
**characterized in that** an Internet protocol is used as a network protocol for data interchange in the network, and the network addresses are created on the basis of the Internet protocol used.

10. Method according to Claim 9,
**characterized in that** the Internet protocol used is Internet Protocol version 6.

11. Method according to Claim 10,
**characterized in that** the router messages are router advertisements based on Internet Protocol version 6.

12. Router component (122) for performing the method according to one of the preceding claims, wherein the router component (122) is designed to use received router messages to identify subnetwork routers (112) connected to the busbar system (101) and to contribute to ascertaining a busbar system prefix (201) according to one of Claims 3 to 5 by evaluating received router messages and producing router messages.

13. Subnetwork router (112) having a router component (122) according to Claim 12.

14. Subnetwork router (112) according to Claim 13, **characterized in that** the subnetwork router (112) is in the form of a programmable logic controller or integrated in a programmable logic controller.

## Revendications

1. Procédé pour allouer des adresses de réseau pour des utilisateurs du réseau d'un réseau segmenté (1) comportant plusieurs sous-réseaux (111), qui sont raccordés chacun par un routeur de sous-réseau (112) à un réseau collectif (101) qui les relie, dans lequel une zone d'adresse commune est déterminée de façon décentralisée par les routeurs de sous-réseau (112) par un échange d'informations de routeurs distribuées sur le réseau collectif (101) et des adresses de réseau pour les utilisateurs du réseau sont fixées à l'intérieur de la zone d'adresse.

2. Procédé selon la revendication 1, **caractérisé en ce qu'**un préfixe de réseau collectif (201) des adresses de réseau caractérisant le réseau collectif (101) est déterminé de façon décentralisée par les routeurs de sous-réseau (112) entre eux par l'échange des informations de routeurs.

3. Procédé selon la revendication 2, **caractérisé en ce que** l'on émet une prescription de sélection pour la sélection d'un préfixe de réseau collectif (201) parmi une masse de préfixes candidats, chaque routeur de sous-réseau (112) génère un préfixe candidat d'abord indépendamment des autres routeurs de sous-réseau (112), et on détermine ensuite par les routeurs de sous-réseau (112), selon la prescription de sélection émise, le préfixe de réseau collectif (201) par l'échange des informations de routeurs distribuées sur le réseau collectif (101) parmi la masse des préfixes candidats générés par les routeurs de sous-réseau (112).

4. Procédé selon la revendication 2 ou 3, **caractérisé en ce que** l'on sélectionne comme préfixe de réseau collectif (201) le préfixe candidat numériquement le plus petit parmi une masse de préfixes candidats, conformément à la prescription de sélection.

5. Procédé selon la revendication 4, **caractérisé en ce que** le préfixe candidat généré par lui-même est communiqué par chaque routeur de sous-réseau (112) aux autres routeurs de sous-réseau (112) par des informations de routeur jusqu'à ce qu'un préfixe candidat soit communiqué au routeur de sous-réseau (112) par un autre routeur de sous-réseau (112), qui est numériquement plus petit que le préfixe candidat généré par lui-même, et **en ce que** le préfixe candidat généré par lui-même ou un préfixe candidat remplaçant le préfixe candidat généré est remplacé par le routeur de sous-réseau (112) par un préfixe candidat communiqué au routeur de sous-réseau (112) par un autre routeur de sous-réseau (112), dans le cas où le préfixe candidat communiqué au routeur de sous-réseau (112) est numériquement plus petit que le préfixe candidat généré par le routeur de sous-réseau (112) ou que le préfixe candidat remplaçant le préfixe candidat généré.

6. Procédé selon la revendication 5, **caractérisé en ce que** chaque routeur de sous-réseau (112), qui reconnaît une fin de session ou une coupure d'un routeur de sous-réseau (112) qui communique le préfixe de réseau collectif sélectionné (201) aux autres routeurs de sous-réseau (112) au moyen d'informations de routeur, communique le préfixe de réseau collectif sélectionné (201) par des informations de routeur aux autres routeurs de sous-réseau (112) jusqu'à ce que le préfixe de réseau collectif sélectionné (201) lui soit communiqué par un autre routeur de sous-réseau (112), qui possède une adresse de réseau link-local plus petite que lui.

7. Procédé selon l'une quelconque des revendications précédentes, **caractérisé en ce qu'**une zone d'adresse de sous-réseau propre est déterminée par chaque routeur de sous-réseau (112) et une route dans cette zone d'adresse de sous-réseau est communiquée aux autres routeurs de sous-réseau (112) par une information de routeur.

8. Procédé selon la revendication 7, **caractérisé en ce qu'**un préfixe de sous-réseau est déterminé par chaque routeur de sous-réseau (112) à partir de sa zone d'adresse de sous-réseau pour chaque sous-réseau (111) raccordé par lui-même au réseau collectif (101).

9. Procédé selon l'une quelconque des revendications précédentes, **caractérisé en ce que** l'on utilise un protocole Internet comme protocole de réseau pour l'échange de données dans le réseau et les adresses de réseau sont configurées conformément au protocole Internet utilisé.

10. Procédé selon la revendication 9, **caractérisé en ce que** l'on utilise comme protocole Internet le protocole Internet version 6.

11. Procédé selon la revendication 10, **caractérisé en ce que** les informations de routeur sont des annonces de routeur selon le protocole Internet version 6.

12. Composant de routeur (122) pour la mise en oeuvre du procédé selon l'une quelconque des revendications précédentes, dans lequel le composant de routeur (122) est configuré pour reconnaître, à l'aide d'informations de routeur reçues, des routeurs de sous-réseau (112) raccordés au réseau collectif (101) et pour coopérer à la détermination d'un préfixe de réseau collectif (201) selon l'une quelconque des revendications 3 à 5, par évaluation d'informations de routeur reçues et production d'informations de routeur.

13. Routeur de sous-réseau (112) avec un composant de routeur (122) selon la revendication 12.

14. Routeur de sous-réseau (112) selon la revendication 13, **caractérisé en ce que** le routeur de sous-réseau (112) est conçu comme une commande logique programmable ou est intégré dans une commande logique programmable.
